# EUROPEAN PATENT APPLICATION

(11) **EP 0 642 995 A1**
(43) Date of publication of application: **15.03.1995**
(21) Application number: 94306517.7
(22) Date of filing: 05.09.1994
(51) Int. Cl.: B65G 15/14

(54) **Tapered container handler**

(30) Priority: 15.09.1993 US 121763
(71) Applicant: Emhart Glass Machinery Investments Inc., Wilmington, Delaware 19801 (US)
(72) Inventor: Weber, Gary C., Horseheads, New York 14845 (US)
(74) Representative: Randall, John Walter

(57) **Abstract**

A handler for containers comprising horizontally opposed timing belt assemblies for conveying containers along a straight path. Each timing belt assembly has upper and lower belts (16) supported by a pair of idler rollers (32) which define one side of the straight path. The timing belts are driven by the same motor (18) while the upper belts can be displaced transversely of each other to accommodate tapered containers.

## Description

Glass containers are conventionally manufactured in an individual section (I.S.) machine. The manufactured containers are deposited on a conveyor which sequentially delivers them to any number of inspection stations or inspection machines. Such containers can be generally cylindrical or they can be tapered. When a container is cylindrical it can be supported on its base or its periphery can be engaged by opposed pairs of timing belt pairs. Tapered containers have been difficult to convey other than by supporting their base.

The invention generally comprises a handler for containers comprising horizontally opposed timing belt assemblies for conveying containers along a straight path, each including
a frame,
a lower timing belt,
means for supporting said timing belt on said frame including a pair of idler rollers for defining one side of said straight path,
means for driving said lower timing belt including a motor and motor driven drive roller means,
said supporting means further including said motor driven drive roller means,
an upper timing belt, and
means for supporting said upper timing belt including
said motor driven drive roller means,
a pair of idler rollers for defining one side of said straight path,
means for supporting said upper pair of idler rollers, and
means for mounting said upper idler roller supporting means on said frame at a location within a predetermined range of locations extending transverse to said straight path.

It is accordingly an object of the present invention to provide a ware (glassware, etc.) handler which can effectively positively convey tapered ware.

Other objects and advantages of the present invention will become apparent from the following portion of this specification and from the accompanying drawings which illustrate in accordance with the mandate of the patent statutes a presently preferred embodiment incorporating the principles of the invention.

Referring to the drawings:
Figure one is an oblique view of the container inspecting machine made in accordance with the teachings of the present invention;

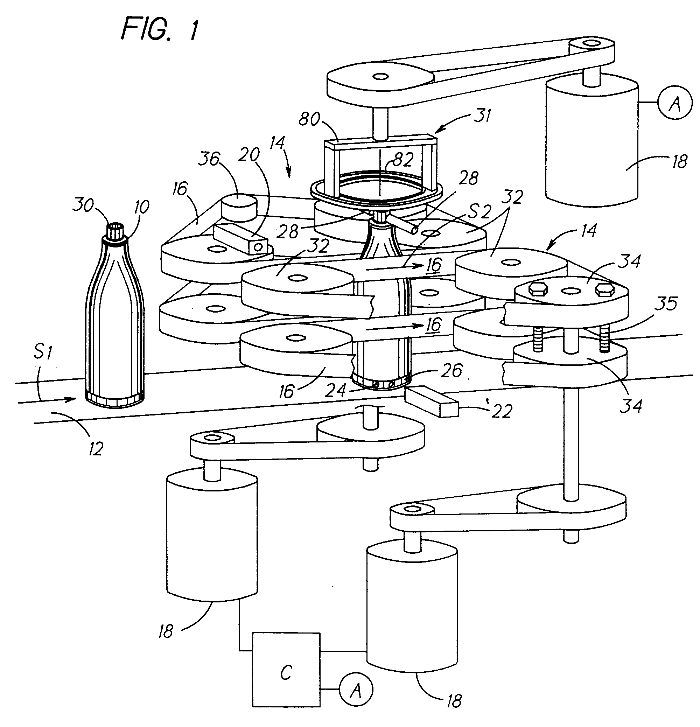

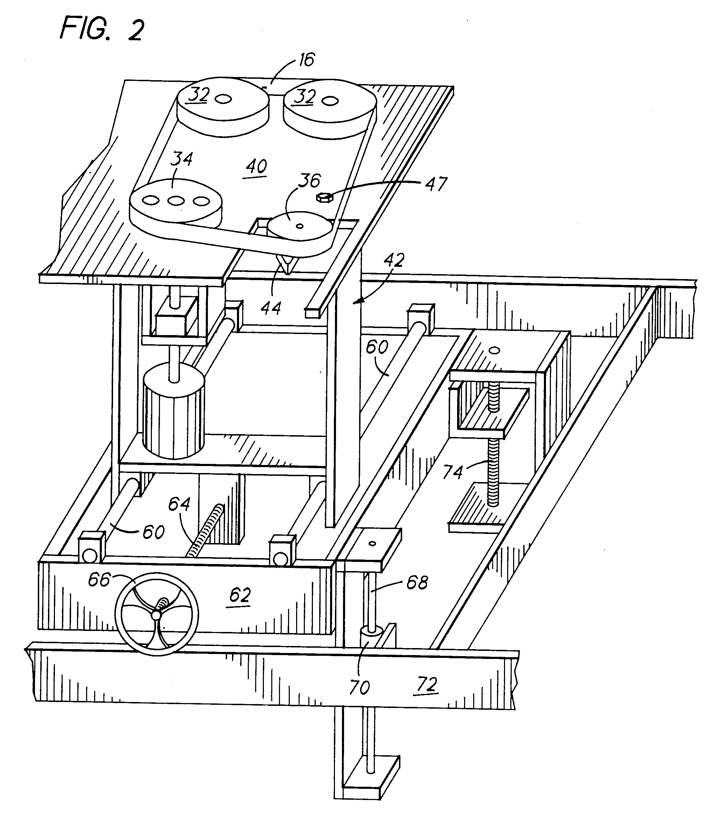

Figure 2 is an oblique view of the machine illustrating how the lower belt of each belt assembly is supported; and
Figure 3 is a top view showing how the upper belt of each belt assembly, is supported.

Spaced bottles 10, which may be made in an I.S. machine, are carried by a horizontal feed conveyor 12 which is moving at a constant speed S1 and are delivered to a second inspection conveyor which is made up of opposed mirror image belt assemblies 14 each supporting a pair of continuous timing belts 16. These belts may have a compliant layer made of foam Neoprene®, for example.

The belts on one side of the bottle path are driven clockwise at a higher constant speed S2 by one profiled motion actuator 18 such as a servo motor and the belts on the other side are driven counterclockwise at this second constant speed S2 by a second servo motor 18. The surface speed S2 of these opposed belts is substantially faster than the speed S1 of the conveyor 12 (approximately twice the speed of the feed conveyor). As a result, as soon as a bottle is gripped by these belts, its linear velocity changes from S1 to S2. Sensor 20 senses a bottle which is being carried by the belts 16 toward an inspection station where it will be stopped so that it can be inspected. The bottle may be rotated by driving the belt assemblies in opposite directions. Two inspection devices are schematically illustrated at the inspection station for inspecting a rotating bottle. A mold number reader 22 will read the molded code 24 on the heel 26 of the rotating bottle and optical sensors 28 will look for checks or cracks in the area of the finish (the threaded portion) 30 of the bottle. Optionally, the structure 31, which supports the optical sensors, rotatively driven with a third servomotor 18, can rotate simultaneously, but oppositely, with the rotation of the bottle to reduce the inspection time. A non rotating bottle could also be inspected by the rotating sensors.

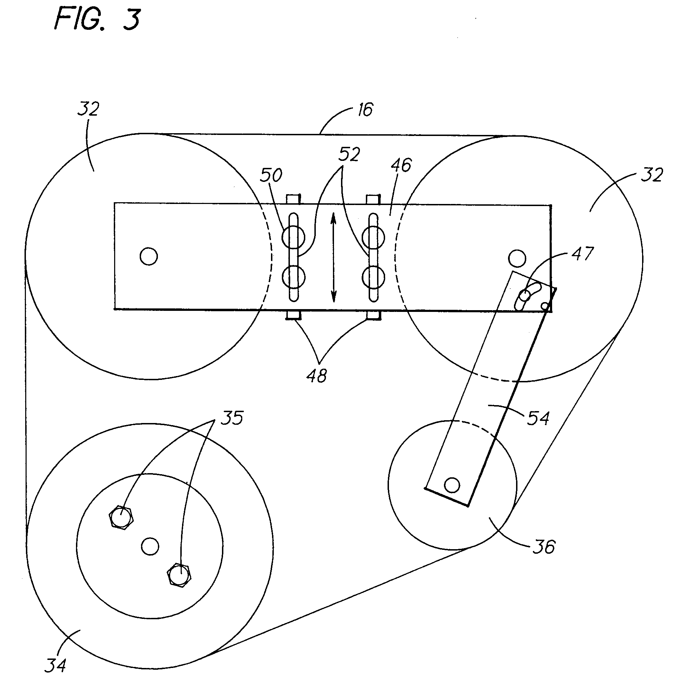

Each belt 16 is supported by a pair of front idlers 32, a drive roller 34 and an adjustable rear idler 36. The lower pair of front idlers 32 and the lower drive roller 34 of each belt assembly are mounted on the support plate 40 (Figure 3) of a slide member 42. The rear idler 36 of each lower belt assembly is mounted on a bracket 44 which is pivotally secured to the support plate 40 and held in the desired position by a suitable fastener. The upper pair of front idlers 32 (Figure 3) of each belt assembly are mounted on an upper support plate 46 which is secured to upstanding posts 48 with bolts 50 that extend through elongated slots 52 so that the upper support plate, and hence, the inner upper idler pair, can be transversely displaced towards or away from the conveyor path relative to the lower idler pair. This enables the inspection conveyor to grip and carry tapered containers whether round or non round. The posts 48 are secured to the support plate 40. The upper rear idler is mounted on the free end of a bracket 54 similar to the lower idler bracket 44 which can be pivotally displaced relative to the upper support plate 46 and secured thereto with a fastener 47 at a selected position. The upper drive roller 34 is secured to the lower drive roller by threaded bolts 35 so that the spacing therebetween can be changed as the spacing between the upper and lower front and rear idlers is changed by placing shims (not shown) between the posts and the upper support plate. If desired, the upper and lower drive rollers could be one extended roller.

Additionally, each belt assembly can be shifted as a whole towards or away from (transverse) the conveyor path since the belt assembly slide member 42 is mounted on a pair of guide rods 60 which extend between the front and rear walls of a box like housing 62. Transverse displacement is controlled via a feed screw 64 which ends at a turning wheel 66. Vertical guide rails 68 are also secured at each corner of the box like housing (only one is shown for purposes of clarity) and these vertical guide rails 68 are received by suitable sleeves 70 which are secured to the machine base 72. Vertical displacement of the box like frame and hence, the belt assembly is effected by rotatable threaded rods 74 which interconnect the four corners of the box like frame and the machine base (only one shown). These threaded rods can be linked together for displacement as pairs or all four can be interconnected.

## Claims

1. A handler for containers comprising horizontally opposed timing belt assemblies for conveying containers along a straight path, each including a frame 40, a lower timing belt 16,
means for supporting said timing belt on said frame including a pair of idler rollers 32 for defining one side of said straight path, means for driving said lower timing belt including a motor 18 and motor driven drive roller means 34, said supporting means further including said motor driven drive roller means, and an upper timing belt 16, characterized by
means for supporting said upper timing belt including
said motor driven drive roller means 34,
a pair of idler rollers 32 for defining one side of said straight path,
means 46 for supporting said upper pair of idler rollers, and
means 48, 50, 52 for mounting said upper idler roller supporting means on said frame at a location within a predetermined range of locations extending transverse to said straight path.

2. A handler for containers according to claim 1, characterized in that said upper timing belt supporting means further comprises
a take-up roller 36,
a lever arm 54 for supporting said take-up roller at one end,
means for supporting the other end of said lever arm on said upper idler roller supporting means for selected pivotal displacement, and
means 47 for securing said lever arm to said upper idler roller supporting means at a selected pivotal location.

3. A handler for containers according to claim 1, characterized in that said motor driven drive roller means comprises
a first motor driven drive roller 34 for supporting said lower timing belt,
a second motor driven drive roller 34 for supporting said upper timing belt, and
means 35 for changing the axial position of one said second motor driven drive roller relative to the other motor driven drive roller.
